# EUROPÄISCHE PATENTSCHRIFT

(11) **EP 2 988 041 B1**
(45) Veröffentlichungstag und Bekanntmachung des Hinweises auf die Patenterteilung: **01.01.2020**
(21) Anmeldenummer: 15180099.2
(22) Anmeldetag: 07.08.2015
(51) Int. Cl.: F16K 15/03, F16K 17/04, F16K 27/02

(54) **VENTIL FÜR EINEN VERDICHTER**
VALVE FOR A COMPRESSOR
SOUPAPE POUR UN COMPRESSEUR

(30) Priorität: 15.08.2014 CH 12312014
(43) Veröffentlichungstag der Anmeldung: 24.02.2016
(73) Patentinhaber: ML Tech GmbH, 8477 Oberstammheim (CH)
(72) Erfinder: Lehmann, Markus, 8477 Oberstammheim (CH)
(74) Vertreter: Dr. Graf & Partner AG

(56) Entgegenhaltungen:
- EP-A2- 2 639 481
- WO-A1-2004/106789
- DE-C- 132 429
- JP-A- 2002 303 120
- US-A- 735 912
- US-A- 3 811 468
- US-A- 5 803 111
- US-A1- 2007 246 218
- US-A1- 2010 112 924

## Beschreibung

Die Erfindung betrifft ein Geradstromventil nach dem Oberbegriff des Anspruchs 1.

Der Absperrkörper dient zur Unterbrechung oder Reduktion einer Fluidströmung durch eine Durchlassöffnung, indem dieser auf eine passend geformte Abschlussfläche, dem sogenannten Ventilsitz, gedrückt wird. Die Abschlussfläche bildet die Dichtfläche aus. Die Abschlussfläche umgibt dabei insbesondere die Durchlassöffnung.

In Verdichtern verwendet man zur Steuerung des Saug- und Druckhubes selbstwirkende Ventile. Unter einem Verdichter, auch Kompressor genannt, versteht man insbesondere eine Vorrichtung zum Komprimieren von Gasen.

Selbstwirkende Ventile enthalten ein Rückstellelement, wie Rückstellfeder, welches den Absperrkörper durch Ausüben einer Rückstellkraft in Schliessstellung hält bzw. in die Schliessstellung drückt. Das Ventil wird durch einen in Durchströmrichtung wirkenden Fluiddruck geöffnet. Der Fluiddruck ist dabei so gross, dass dieser die Rückstellkraft des Rückstellelementes überwindet, so dass der Absperrkörper aus einer Schliess- in eine Offenstellung bewegt wird.

Da ein der Durchströmrichtung entgegen gerichteter Fluiddruck den Absperrkörper zusätzlich zur Rückstellkraft des Rückstellelementes in die Schliessstellung drückt, verhindert das Ventil ein Rückströmen von Fluid. Daher bezeichnet man solche Ventile auch als Rückschlagventile.

Unter Fluid ist nachfolgend insbesondere ein Gas oder eine Flüssigkeit oder ein Gas-Flüssigkeitsgemisch zu verstehen.

Die Ventile gehören zu den wichtigsten Baugruppen eines Verdichters. Sie sollen eine ausreichend grosse Äquivalentfläche haben, um die bei der Durchströmung auftretenden Energieverluste minimal zu halten. Die Äquivalentfläche wird auch Durchströmfläche oder Spaltfläche genannt. Ferner soll das durch das Ventil strömende Fluid möglichst nicht umgelenkt und eine Wirbelbildung im Ventil vermieden werden. Das Ventil soll zudem schon bei geringem Überdruck schnell öffnen. Andererseits soll das Ventil am Saug- und Druckhubende aber auch rechtzeitig schliessen. Das Ventil soll zudem im geschlossenen Zustand dicht sein. Schliesslich soll das Ventil robust und verschleissfest sein. Deshalb sollen sich die Bauteile des Ventils möglichst reibungsarm bewegen. Neben geringem Verschleiss kann bei einer geringen Reibung auch auf ein Schmieren des Ventils verzichtet werden.

Es sind eine Vielzahl von Ventilkonstruktionen für Verdichter, insbesondere für Kolbenverdichter bekannt. So sind beispielsweise Hubventile, auch Sitzventile genannt, bekannt. Bei Hubventilen hebt sich der Absperrkörper senkrecht von der Ventilöffnung ab. Der Absperrkörper kann z. B. als Platte, Zylinder, Kegel, Kegelstumpf oder Kugel ausgebildet sein. Neben dem Abschlusskörper enthalten selbstwirkende Hubventile einen Ventilsitz, einen Hubbegrenzer sowie eine Rückstellfeder. Ist der Absperrkörper tellerförmig ausgebildet so spricht man auch von Tellerventilen. Gibt der Absperrkörper lediglich eine ringförmige Durchlassöffnung frei, etwa weil in der Mitte eine Achse angeordnet ist, so spricht man auch von Ringventilen.

Da das Absperrorgan von Hubventilen nahezu parallel zur Durchströmrichtung des Fluids bewegt wird und dadurch auch bei offenem Ventil im Strömungsquerschnitt angeordnet ist, erfolgt eine erhebliche Umlenkung der Strömung im Bereich des Ventils, dies verbunden mit Wirbelbildung. Entsprechend treten Energieverluste auf. Die Durchströmrichtung entspricht dabei der Strömungsrichtung des Fluids durch das Ventil, insbesondere durch die Durchlassöffnung des Ventils.

Im Weiteren sind auch selbstwirkende Geradstromventile bekannt. Diese werden vor allem in Kolbenverdichtern verwendet. Geradstromventile zeichnen sich dadurch aus, dass der Absperrkörper bei offenem Ventil einen nahezu umlenkungsfreien Fluiddurchlass freigibt. Dadurch treten kaum Umlenkverluste auf, was die Wirtschaftlichkeit und die Leistung des Ventils und des ganzen Verdichters verbessert. Ein Geradstromventil ermöglicht auch eine Vergrösserung des Durchlassquerschnittes und dadurch eine Steigerung der VentiIleistung.

Die Publikationsschrift US 735,912 A beschreibt ein Ventil für eine Zufuhrleitung für einen Gasmotor. Das Ventil ist ein Rückschlagventil und weist eine federbelastete Ventilklappe auf. Die Ventilklappe ist in der Schliessstellung schräg zur Strömungsrichtung angeordnet.

Die Publikationsschrift WO 2004/106789 A1 beschreibt ein Überdruckventil mit einer Ventilklappe. Eine Torsionsfeder übt auf die Ventilklappe eine Rückstellkraft aus, welche die Ventilklappe bei unterschreiten eines Überdruckes in der Schliessstellung hält bzw. in diese zurückführt.

Die Publikationsschrift JP 2002-303120 A beschreibt einen Auspufftopf mit einem Rückschlagventil zur Vermeidung von Störgeräuschen, welche durch Unterdruckverhältnisse im Auspuffrohr verursacht werden. Das Rückschlagventil enthält eine Ventilklappe, welche in der Schliessstellung schräg zur Strömungsrichtung angeordnet ist.

Bekannte, selbstwirkende Geradstromventile weisen jedoch den Nachteil auf, dass diese immer noch eine gewisse Umlenkung des Fluidstroms bewirken. Zudem setzen sich bekannte Geradstromventile aus vielen Einzelteilen zusammen, was die Dichtheit des Ventils negativ beeinflusst. In anderen Fällen weist der Ventilkörper eine komplexe Bauform auf, was einen hohen Herstellungsaufwand zur Folge hat. Ferner kann die auf den Ventilkörper wirkende Rückstellkraft nicht von aussen beeinflusst werden.

Es ist daher eine Aufgabe der Erfindung, ein Geradstromventil zu schaffen, welches möglichst wenig Druckverluste aufweist. Das Fluid soll dabei möglichst ohne Umlenkung durch das Ventil strömen können.

Eine weitere Aufgabe der Erfindung ist es, ein Geradstromventil zu schaffen, das konstruktiv möglichst einfach aufgebaut, robust und verschleissarm ist. Das Ventil soll insbesondere möglichst wenig Reibungsfläche ausbilden. Das Ventil soll insbesondere ohne Schmierung auskommen.

Es ist eine weitere Aufgabe der Erfindung ein Geradstromventil zu schaffen, dessen Fluiddurchflussquerschnitt gegenüber einem Fluidzufuhrquerschnitt möglichst wenig reduziert ist.

Es ist eine weitere Aufgabe der Erfindung eine Ventilanordnung zu schaffen, welche sich aus beliebig vielen Einzelventilen in beliebiger Grösse und Form konstruieren lässt.

Wenigstens eine der oben genannten Aufgabe wird durch die Merkmale der Ansprüche 1 und 14 gelöst. Vorteilhafte Weiterbildungen und Ausführungsformen der Erfindung ergeben sich aus den abhängigen Ansprüchen, der Beschreibung und den Zeichnungen.

Der Absperrkörper ist zwischen einer Offen- und einer Schliessstellung schwenkbar beweglich. Der Absperrkörper führt also zwischen Offenstellung und Schliessstellung eine Winkelbewegung aus.

Der Absperrkörper ist beim Öffnen des Ventils insbesondere aus dem durch die Durchlassöffnung vorgegebenen Strömungsquerschnitt in eine maximale Offenstellung vollständig ausschwenkbar.

Der Absperrkörper kann insbesondere um eine geometrische Schwenkachse schwenkbar sein. Der Absperrkörper braucht jedoch nicht um eine mechanische Achse schwenkbar gelagert zu sein. Eine solche Achse kann jedoch vorgesehen sein.

Durch den Einsatz von Rückstellmitteln ist das Ventil selbstwirkend ausgebildet. Das heisst, die Betätigung des Ventils erfolgt primär nicht durch einen aktiven Eingriff von aussen, z. B. manuell oder über eine Steuerung oder einen Regelkreis. Die Betätigung des Ventils erfolgt vielmehr durch die Druckverhältnisse vor und hinter dem Ventil sowie durch die auf den Absperrkörper wirkenden Federkräfte.

Der Ventilkörper enthält eine Durchlassöffnung. Der Ventilsitz bildet eine, die Durchlassöffnung im Ventilkörper umgebende Abschlussfläche aus.

Der Ventilkörper bildet ferner einen Zufuhrkanal aus, welcher in Durchströmrichtung betrachtet in der Durchlassöffnung endet. Der Zufuhrkanal weist eine Kanalachse auf, welche parallel zur Durchströmrichtung des Fluids angeordnet ist. Der Zufuhrkanal ist insbesondere derart relativ zum V-förmigen Einschnitt angeordnet, dass die Fortsetzung der zur Durchströmrichtung des Zufuhrkanals parallelen Kanalachse durch den V-förmigen Einschnitt verläuft, ohne die dem Ventilsitz gegenüber liegende Wand des Einschnittes zu kreuzen.

Der Zufuhrkanal ist insbesondere derart relativ zum V-förmigen Einschnitt angeordnet, dass die Fortsetzung der zur Durchströmrichtung des Zufuhrkanals parallelen Kanalachse mit der die Durchlassöffnung enthaltenden Wand des Einschnittes einen spitzen Winkel einschliesst.

Der Zufuhrkanal ist insbesondere derart relativ zum V-förmigen Einschnitt angeordnet, dass die virtuelle Verlängerung des Durchströmquerschnittes der Durchlassöffnung entlang der zur Durchströmrichtung parallelen Kanalachse des Zufuhrkanals in den V-förmigen Einschnitt hinein die dem Ventilsitz gegenüber liegende Wand des Einschnittes nicht schneidet.

Ferner können Verlängerungsabschnitte, welche einen geschlossenen Kanalabschnitt ausbilden mit dem Zufuhrkanal verbunden sein. Die Verlängerungsabschnitte sind insbesondere auf der der Durchlassöffnung gegenüber liegenden Seite mit dem Zufuhrkanal verbunden. Die Verlängerungsabschnitte können über einen Steckabschnitt in den Zufuhrkanal gesteckt, insbesondere eingepresst, sein. Die Verlängerungsabschnitte können zylinderförmig sein.

Der Verlängerungsabschnitt eines Einzelventils kann, insbesondere mit einem Verbindungsabschnitt, in eine Durchgangsöffnung eines Trägers, insbesondere einer Trägerplatte, eingeführt sein. Der Träger kann aus Metall oder Kunststoff sein.

Der Träger kann mehrere Durchgangsöffnungen aufweisen, in welche jeweils ein Verlängerungsabschnitt eines Ventils eingeführt ist. Die Verlängerungsabschnitte können, insbesondere über den Verbindungsabschnitt, in die Durchgangsöffnungen eingesteckt bzw. eingepresst oder eingeschraubt sein. Auf diese Weise erhält man eine Ventilanordnung mit einer Mehrzahl von auf einem Träger befestigten Einzelventilen. Der Träger lässt sich beispielsweise in den Durchflussquerschnitt eines Fluidkanals, z. B. eines Rohres, einbauen.

Der Absperrkörper ist in der Schliessstellung insbesondere schräg zur Strömungsrichtung angeordnet. Der Absperrkörper kann in der Schliessstellung insbesondere in einem spitzen Winkel zur Durchströmrichtung angeordnet sein. Der Absperrkörper bildet in Schliessstellung also eine Art Schrägsitz aus.

Der Absperrkörper kann in der Schliessstellung in einem Winkel von 5° (Winkelgrade) oder grösser, insbesondere von 7° oder grösser zur Strömungsrichtung angeordnet sein. Der Absperrkörper kann in der Schliessstellung in einem Winkel von 50° oder kleiner, insbesondere von 43° oder kleiner zur Strömungsrichtung angeordnet sein.

Da der Absperrkörper in der Schliessstellung dem Ventilsitz anliegt, ist der Ventilsitz insbesondere ebenfalls schräg zur Strömungsrichtung angeordnet. Der Ventilsitz kann in der Schliessstellung insbesondere in einem spitzen Winkel zur Strömungsrichtung angeordnet sein. Der Winkel kann das im Zusammenhang mit dem Absperrkörper oben genannte Mass aufweisen.

Das Absperrorgan kann auf einer Stützfläche gelagert bzw. abgestützt sein.

Das Absperrorgan liegt der Stützfläche insbesondere an, z. B. über eine Kante.

Das Absperrorgan ist also mit der Stützfläche insbesondere nicht verbunden.

Die Stützfläche bildet insbesondere einen Anschlag für das Absperrorgan aus.

Die Stützfläche liegt insbesondere ausserhalb des durch die Durchlassöffnung vorgegebenen Durchströmquerschnitts.

Die geometrische Schwenkachse verläuft dabei insbesondere durch den Kontaktbereich zwischen Absperrorgan und Stützfläche.

Gemäss der Erfindung bildet der Ventilkörper einen Einschnitt aus. Der Einschnitt ist insbesondere schlitz- bzw. spaltförmig. Die beiden Wände des Einschnittes laufen entgegen der Durchströmrichtung insbesondere aufeinander zu. Der Einschnitt ist im Querschnitt V-förmig. Die Durchlassöffnung ist im Einschnitt angeordnet. Entsprechend mündet ein allfälliger Fluidzufuhrkanal im Einschnitt.

Die erste Wand des Einschnittes ist insbesondere ortsfest. Die erste Wand des Einschnittes bildet den Ventilsitz aus, daher auch die

Bezeichnung Ventilsitzwand. Die erste Wand ist insbesondere in einem Winkel, z. B. einem spitzen Winkel, zur Durchströmrichtung angeordnet. Der Winkel kann das im Zusammenhang mit dem Absperrkörper oben genannte Mass aufweisen. Der Ventilsitz wird insbesondere durch eine Teilfläche der ersten Wand ausgebildet.

Eine zweite Wand des Einschnittes bildet insbesondere eine Schwenkbegrenzung für den Absperrkörper in der Offenstellung aus, daher auch die Bezeichnung Begrenzungswand. Die zweite Wand bildet einen Anschlag für die Rückstellmittel aus. Die zweite Wand ist insbesondere ortsfest.

Die zweite Wand kann parallel zur Durchströmrichtung ausgerichtet sein. Die zweite Wand kann mit der Durchströmrichtung auch einen spitzen Winkel einschliessen.

Der Einschnitt kann ferner einen Stützboden ausbilden, auf welchem das Absperrorgan abgestützt ist. Dieser entspricht der oben genannten Stützfläche. Die geometrische Schwenkachse verläuft dabei insbesondere durch den Kontaktbereich zwischen Absperrorgan und Stützboden.

Der Stützboden wird im Bereich der zusammenlaufenden ersten und zweiten Wand des Einschnittes ausgebildet. Der Stützboden ist insbesondere linienförmig. Der Stützboden liegt insbesondere vollständig ausserhalb der Durchlassöffnung. Das heisst, der Stützboden durchschneidet die Durchlassöffnung insbesondere nicht. Dadurch kommt ein in der Offenstellung parallel zur zweiten Wand bzw. parallel zur Durchströmrichtung ausgerichteter Absperrkörper vollständig ausserhalb des durch die Durchlassöffnung vorgegebenen Strömungsquerschnitts zu liegen.

Das Absperrorgan kann aus Kunststoff sein oder Kunststoff enthalten. Das Absperrorgan kann aus Metall sein oder Metall enthalten.

Der Absperrkörper kann ein plattenförmiges Element sein. Der Absperrkörper kann insbesondere eine Ventilplatte sein. Der Absperrkörper kann auch als Ventilklappe bezeichnet werden. Durch den Einsatz von Rückstellmitteln können die Absperrkörper die Funktion als Rückschlagklappen haben.

Die Rückstellmittel dienen dazu, den Absperrkörper in die Schliessstellung zurückzubewegen bzw. zurückzuführen bzw. den Absperrkörper in der Schliessstellung zu halten. Die Rückstellmittel weisen in der Schliessstellung insbesondere eine Vorspannung auf, so dass der Ventilkörper bei ausgeglichenen Druckverhältnissen vor und hinter dem Ventil gegen den Ventilsitz gedrückt wird.

Die Rückstellmittel können integraler Bestandteil des Absperrorgans sein. Das Absperrorgan mit Rückstellmittel kann insbesondere einteilig ausgebildet sein.

Die Rückstellmittel können auch ein vom Absperrorgan unabhängig ausgebildetes Rückstellelement umfassen oder daraus bestehen. Im letzteren Fall besteht das Absperrorgan insbesondere aus dem Absperrkörper. Absperrkörper und Rückstellelement sind insbesondere als Einzelteile ausgebildet.

Das Rückstellelement kann einteilig ausgebildet sein. Das Absperrorgan bzw. der Absperrkörper kann einteilig ausgebildet sein.

Die Rückstellmittel sind in der Lage, auf das Absperrorgan eine Rückstellkraft auszuüben. Die Rückstellmittel können insbesondere Elemente bzw. Abschnitte mit elastischen Eigenschaften umfassen, welche die Rückstellung durch elastische Rückverformung bewirken.

Das Rückstellelement ist insbesondere elastisch deformierbar. Das Rückstellelement kann ein Federelement bzw. eine Rückstellfeder sein. Das Rückstellelement kann aus Federstahl, insbesondere aus Federdraht oder Federblech sein. Das Rückstellelement kann auch aus Kunststoff sein.

Gemäss einer besonderen Ausführung enthält das Federelement Federschenkel, auch Federarme genannt. Das Federelement enthält zur Ausübung einer Rückstellkraft auf den Rückstellkörper wenigstens einen ersten Federschenkel, welcher mit dem Absperrkörper in mechanischer Wirkverbindung steht sowie wenigstens einen zweiten Federschenkel, welcher mit der zweiten Wand des Einschnittes in mechanischer Wirkverbindung steht. Der zweite Federschenkel ist in Betriebsposition insbesondere ortsfest angeordnet.

Die beiden Federschenkel sind über einen Verbundabschnitt miteinander verbunden. Das Federelement ist in den Einschnitt eingeführt und ist mit seinem Verbundabschnitt zum Stützboden des Einschnittes gerichtet. Das Federelement ist insbesondere zwischen Absperrkörper und zweite Wand in den Einschnitt eingeführt.

Die Federschenkel sind aus einer gemeinsamen Ebene herausgebogen. Sie schliessen daher gegenseitig einen Winkel ein. Werden die beiden Federschenkel, wie anhand der nachfolgend gezeigten Ausführungsbeispielen noch näher erläutert, durch Schwenken des Absperrkörpers zur zweiten Wand hin zueinander hin bewegt, so baut sich eine Rückstellkraft auf, welche auf den Absperrkörper in Richtung der Schliessstellung wirkt. Das Federelement wird daher auch Biegefeder genannt.

Der wenigstens eine mit dem Absperrkörper in Wirkverbindung stehende Federschenkel kann eine Verlängerung in Ausführung eines Stellfingers enthalten, welcher sich über den Einschnitt hinaus erstreckt. Über den Stellfinger kann die Stellung des Absperrkörpers manuell oder über einen Aktuator gesteuert eingestellt werden.

So kann auf den Stellfinger eine Kraft ausgeübt werden, welche, je nach Aufgabe, der Rückstellkraft des Federelementes entgegenwirkt oder diese unterstützt.

Es kann auch einfach ein fester oder beweglicher Anschlag vorgesehen sein, an welchem der Stellfinger anschlägt. Die Position des Anschlags kann z. B. durch einen Aktuator eingestellt werden.

Auf diese Weise kann das Ventil z. B. über den Stellfinger offen gehalten werden.

Ferner lässt sich über den Stellfinger auch der Schwenkwinkel und somit beispielsweise die maximal mögliche Offenstellung verändern.

Im Weiteren lässt sich auf diese Weise über den Stellfinger auch die Andrückkraft in der Schliessstellung verändern.

Der wenigstens eine Federschenkel, welcher mit dem Absperrkörper in mechanischer Wirkverbindung steht, enthält zur Sicherung des Absperrkörpers am Federelement insbesondere eine in eine Vertiefung im Absperrkörper eingreifende Führungszunge. Die Führungszunge ist insbesondere zum Absperrkörper hin aus dem Federschenkel ausgebogen. Die Führungszunge ist insbesondere in die Vertiefung eingehakt.

Der wenigstens eine Federschenkel, welcher mit der zweiten Wand in mechanischer Wirkverbindung steht, enthält zur Sicherung des Federelements am Ventilkörper insbesondere eine in eine Vertiefung in der zweiten Wand eingreifende Führungszunge. Die Führungszunge ist insbesondere zur zweiten Wand hin aus dem Federschenkel ausgebogen. Die Führungszunge ist insbesondere in die Vertiefung eingehakt.

Die Paarung aus Absperrkörper und Federelement lässt sich so im Einschnitt des Ventilkörpers einhängen und befestigen. Ferner führt auch der Absperrkörper durch die Führungszungen eine geführte Bewegung aus. Der Absperrkörper kann sich gegenüber dem Federelement insbesondere nicht verschieben.

Der Ventilkörper ist insbesondere aus Metall. Der Ventilkörper kann auch aus Kunststoff sein oder diesen enthalten. Der Ventilkörper kann ein Massivbauteil sein. Der Ventilkörper ist insbesondere einteilig ausgebildet. Der Ventilkörper enthält insbesondere keine beweglichen Teile. Der Ventilkörper umfasst insbesondere keine montierbaren bzw. demontierbaren Teile.

Die Durchlassöffnungen bzw. die Zufuhrkanäle können in den Ventilkörper gebohrt sein. Die Einschnitte können in den Ventilkörper gefräst sein.

Gemäss einer Weiterbildung der Erfindung ist das oben beschriebene Ventil Teil einer Ventilanordnung. Die Ventilanordnung enthält eine Mehrzahl von Ventilen, wobei die Ventilanordnung einen gemeinsamen Ventilkörper für die Ventile aufweist. Der Ventilkörper enthält entsprechend eine Mehrzahl von Durchlassöffnungen, welche mit einem Absperrorgan in der bereits beschriebenen Art verschliessbar sind. Eine Durchlassöffnung steht jeweils für ein einzelnes Ventil. Der Ventilkörper wird insbesondere aus einer Platte gefertigt.

Die Ventilanordnung enthält so eine Gruppe von einzelnen Ventilen. Die Ventile können einzeln oder gemeinsam betätigbar sein.

So kann für jede Durchlassöffnung ein separates Absperrorgan vorgesehen sein. Es kann jedoch auch für mehrere Durchlassöffnungen ein gemeinsames Absperrorgan vorgesehen sein.

Ferner kann für jede Durchlassöffnung ein separates Federelement vorgesehen sein. Es kann auch für mehrere Durchlassöffnungen ein gemeinsames Federelement vorgesehen sein.

Der Ventilkörper der Ventilanordnung enthält insbesondere wenigstens einen länglichen Einschnitt der oben beschriebenen Art. In diesem Einschnitt können hintereinander entlang einer Längsachse mehrere Durchlassöffnungen in der bereits oben beschriebenen Art angeordnet sein. Der Einschnitt bildet in Längsrichtung durchgehende Wände und einen durchgehenden Stützboden der bereits oben beschriebenen Art aus. Der Ventilkörper kann mehrere solcher, parallel zueinander angeordnete Einschnitte enthalten.

Der Ventilkörper kann eine runde oder polygonale oder kombinierte Umfangsgeometrie aufweisen.

Die oben beschriebene Ventilanordnung eignet sich insbesondere für grosse Zustromquerschnitte.

Anstelle von Ventilanordnungen der oben beschriebenen Art mit einem gemeinsamen Ventilkörper, lassen sich auch einzelne Ventile mit eigenem Ventilkörper z. B. in der bereits oben beschriebenen Art zu grösseren Ventilanordnungen kombinieren.

Ferner lassen sich auch Ventilanordnungen mit einem gemeinsamen Ventilkörper und einer Mehrzahl von Ventilen zu noch grösseren Ventilanordnungen kombinieren. Die Elemente können zum Beispiel zu einer Platte montiert werden.

Mit solchen Ventilanordnungen lassen sich beliebig grosse Anströmquerschnitte, insbesondere Rohrquerschnitte, abdecken.

Das erfindungsgemässe Ventil bzw. die erfindungsgemässe Ventilanordnung findet insbesondere Verwendung in einem Verdichter, insbesondere in einem Kolbenverdichter.

Das erfindungsgemässe Ventil bzw. die erfindungsgemässe Ventilanordnung kann auch in einer Vakuumpumpe Verwendung finden.

Das erfindungsgemässe Ventil bzw. die erfindungsgemässe Ventilanordnung kann jedoch auch allgemein in einer Rohrleitung Verwendung finden.

Dank dem erfindungsgemässen Ventil wird das durch das Ventil strömende Fluid nicht mehr umgelenkt. Das Fluid kann ungehindert durch das Ventil fliessen. Das erfindungsgemässe Ventil stellt daher eine Art Freistrom-Ventil dar.

Das heisst, der Durchflussquerschnitt durch das Ventil ist gegenüber einem Zufuhrquerschnitt insbesondere nicht eingeengt. Dies insbesondere auch deshalb, weil das Absperrorgan in vollständiger Offenstellung vollständig aus dem durch die Durchlassöffnung vorgegebenen Durchströmquerschnitt ausgeschwenkt ist. Dadurch treten geringere Energieverluste auf. Es besteht zudem auch keine Verstopfungsgefahr des Ventils durch feste Teile.

Dank dem erfindungsgemässen Ventil ist es möglich den Ventilkörper aus einem Teil zu fertigen. Dies wirkt sich positiv auf die Dichtheit des Ventils aus und erlaubt eine wirtschaftliche Herstellung des Ventils.

Ferner ist es auch möglich durch eine Kombination von mehreren baugleichen Ventilen, entweder integral auf einer gemeinsamen Ventilkörper vereinigt oder zusammengesetzt aus einzelnen Ventilkörpern, eine beliebig grosse Ventilanordnung in einer beliebigen Querschnittsfläche zu konstruieren.

Im Folgenden wird der Erfindungsgegenstand anhand von Ausführungsbeispielen, welche in den beiliegenden Zeichnungen dargestellt sind, näher erläutert. Es zeigen jeweils:
- Figur 1:: eine perspektivische Ansicht eines erfindungsgemässen Ventils gemäss einer ersten Ausführungsform;
- Figur 2:: eine Querschnittsansicht durch das Ventil nach Figur 1;
- Figur 3:: eine Explosionsansicht des Ventils nach Figur 1 und 2;
- Figur 4:: eine perspektivische Ansicht eines erfindungsgemässen Ventils gemäss einer zweiten Ausführungsform;
- Figur 5:: eine Explosionsansicht des Absperrkörpers und des Federelementes des Ventils nach Figur 4;
- Figur 6:: eine perspektivische Ansicht einer Ventilanordnung mit mehreren Ventilen gemäss einer ersten Ausführungsform;
- Figur7:: eine Draufsicht einer Ventilanordnung mit mehreren Ventilen gemäss einer zweiten Ausführungsform;
- Figur 8:: eine Draufsicht einer Ventilanordnung mit mehreren Ventilen gemäss einer dritten Ausführungsform.

Grundsätzlich sind in den Figuren gleiche Teile mit gleichen Bezugszeichen versehen. Die beschriebenen Ausführungsbeispiele stehen beispielhaft für den Erfindungsgegenstand oder dienen seiner Erläuterung und haben keine beschränkende Wirkung.

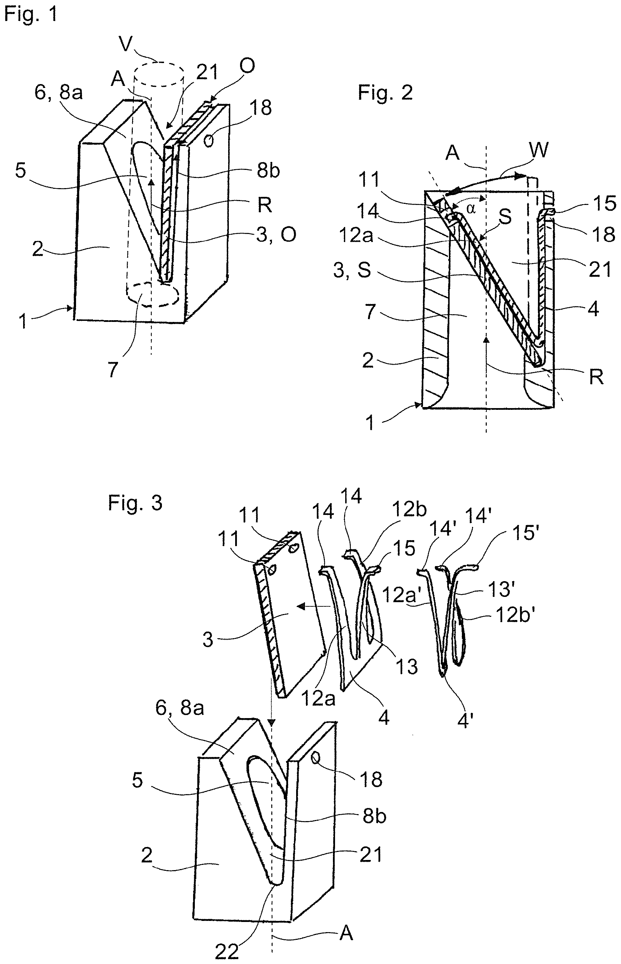

Das in den Figuren 1 bis 3 gezeigte Ventil 1 umfasst einen Ventilkörper 2, Absperrorgan in Form eines plattenförmigen Absperrkörpers 3 sowie eine Biegefeder 4.

Der Ventilkörper 2 weist einen V-förmigen Einschnitt 21 auf, welcher von einer ersten Wand 8a und einer zweiten Wand 8b begrenzt wird. Im Weiteren enthält der Ventilkörper 2 einen Zufuhrkanal 7, welcher in Durchströmrichtung R in einer Durchlassöffnung 5 mündet. Der Zufuhrkanal 7 ist entlang einer Kanalachse A ausgerichtet. Die Durchströmrichtung R des Fluids verläuft parallel zur Kanalachse A.

Die Durchlassöffnung 5 liegt vollständig in der ersten Wand 8a des Einschnitts 21. Die erste Wand 8a schliesst mit der Durchströmrichtung R bzw. Kanalachse A einen spitzen Winkel α ein. Die erste Wand 8a liegt also schräg zur Durchströmrichtung R bzw. zur Kanalachse A. Die zweite Wand 8b liegt parallel zur Kanalachse A bzw. zur Durchströmrichtung R.

Ebenfalls eingezeichnet ist die virtuelle Verlängerung des Durchströmquerschnitt V der Durchlassöffnung 5 entlang der zur Durchströmrichtung R parallelen Kanalachse A.

Der Ventilsitz 6 wird durch eine die Durchlassöffnung 5 umgebende Fläche, welche Teil der ersten Wand 8a ist, ausgebildet. Entsprechend liegt der Ventilsitz 6 ebenfalls schräg zur Durchströmrichtung R bzw. zur Kanalachse A.

Der Einschnitt 21 bildet einen linienförmigen Stützboden 22 aus, welcher seitlich vom Zufuhrkanal 7 bzw. seitlich von der Durchlassöffnung 5, das heisst ausserhalb der Durchlassöffnung 5, verläuft. Der Stützboden 22 ist konkav ausgebildet.

Der Absperrkörper 3 ist in den Einschnitt 21 eingeführt und wird am Stützboden 22 des Einschnitts 21 abgestützt.

Die Biegefeder 4 ist aus einem Federblech geformt und weist zwei äussere Federschenkel 12a, 12b sowie einen mittigen Federschenkel 13, welcher zwischen den beiden äusseren Federschenkeln 12a, 12b angeordnet ist, auf. Die Federschenkel 12a, 12b, 13 sind über einen Verbindungsabschnitt miteinander verbunden. Die Biegefeder 4 ist einteilig ausgebildet.

Die beiden äusseren Federschenkel 12a, 12b sind in eine erste gemeinsame Richtung aus der Ebene der flächigen Biegefeder 4 gebogen. Der mittige Federschenkel 13 ist in eine zweite Richtung aus der Ebene der flächigen Biegefeder 4 gebogen, welche entgegengesetzt zur ersten Richtung ist. Entsprechend schliessen die seitlichen Federschenkel 12a, 12b mit dem mittigen Federschenkel einen spitzen Winkel ein. Die Biegefeder 4 ist zwischen dem Absperrkörper 3 und der zweiten Wand 8b des Einschnittes 21 in den Einschnitt 21 eingeführt. Der Verbindungsabschnitt der Biegefeder 4 ist dabei zum Stützboden 22 hin gerichtet. Die äusseren Federschenkel 12a, 12b sind zum Absperrkörper 3 hin und der mittige Federschenkel 13 ist zur zweiten Wand 8b des Einschnittes 21 hin gerichtet.

Die Federschenkel 12a, 12b, 13 weisen an ihren freien Schenkelenden jeweils eine Führungszunge 14, 15 auf. Die Führungszungen 14 der äusseren Federschenkel 12a, 12b sind in Richtung Absperrkörper 3 aus dem Federschenkel 12a, 12b gebogene Führungsabschnitte. Die Führungszunge 15 des mittigen Federschenkels 13 ist ein in Richtung zweite Wand 8b aus dem Federschenkel 13 gebogener Führungsabschnitt.

Die Führungszungen 14 der äusseren Federschenkel 12a, 12b sind in Öffnungen 11 am Absperrkörper 3 eingehakt. Die Führungszunge 15 des mittigen Federschenkels 13 ist in eine Öffnung 18 in der zweiten Wand 8b eingehakt. Auf diese Weise ist die Biegefeder 4 im Einschnitt gegen ein Herausfallen gesichert. Ferner ist der Absperrkörper 3 an der Biegefeder 4 gegen ein Verschieben gesichert.

Die Biegefeder 4 ist nun so ausgestaltet und die Federschenkel 12a, 12b, 13 sind so ausgerichtet, dass die Biegefeder 4 über die äusseren Federschenkel 12a, 12b eine Rückstellkraft auf den Absperrkörper 3 überträgt. Der Absperrkörper 3 wird dabei über die äusseren Federschenkel 12a, 12b in Schräglage über die Durchlassöffnung 5 gegen den Ventilsitz 6 gedrückt. Der mittige Federschenkel 15 liegt dabei der ortsfesten zweiten Wand 8b an. Die Durchlassöffnung 5 ist durch den Absperrkörper 3 verschlossen.

Die Biegefeder 4 weist dabei eine gewisse Vorspannung auf, so dass diese eine Andrückkraft auf den dem Ventilsitz 6 anliegenden Absperrkörper 3 ausübt. Der Absperrkörper 3 übernimmt im Zusammenwirken mit dem Ventilsitz 6 die Dichtungsfunktion. Die Figur 2 zeigt eine solche Schliessstellung S des Ventils.

In der Figur 3 ist im Weiteren noch eine alternative Ausführungsform einer Biegefeder 4' dargestellt. Die Biegefeder 4' ist aus Federdraht gefertigt. Sie weist ebenfalls zwei äussere Federschenkel 12a', 12b', und einen mittigen Federschenkel 13' auf, welcher zwischen den beiden äusseren Federschenkeln 12a', 12b' angeordnet ist. Die Federschenkel 12a', 12b', 13' weisen ebenfalls Führungszungen 14', 15' der oben beschriebenen Art auf.

Der mittige Federschenkel 13' wird durch eine schlaufenartige Fortführung der äusseren Federschenkel 12a', 12b' ausgebildet. Die beiden Abschnitte der schlaufenartigen Fortführung vereinigen sich im mittigen Federschenkel 13'. Der Verbindungsabschnitt wird entsprechend durch die schlaufenartige Fortführung der äusseren Federschenkel 12a', 12b' ausgebildet.

Wird nun auf der Zufuhrseite eine in Durchströmrichtung R wirkende Druckkraft auf den Absperrkörper 3 ausgeübt, welche grösser ist als die Rückstellkraft der Biegefeder 4 und gegebenenfalls eines auf der Wegfuhrseite auf den Absperrkörper 3 entgegen der Durchströmrichtung R wirkenden Gegendruckes, so wird der Absperrkörper 3 vom Ventilsitz abgehoben und in Richtung Offenstellung von der Durchlassöffnung 5 weggeschwenkt. Der Absperrkörper 3 gibt die Durchlassöffnung 5 frei und das Ventil 1 öffnet sich.

Je nach Druckverhältnissen zwischen den beiden Ventilseiten kann der Absperrkörper zwischen einer Schliessstellung und einer Offenstellung hin- und herschwenken.

Beim Öffnen des Ventils 1 schwenkt also der Absperrkörper 3 unter Ausführung einer Winkelbewegung W vom Ventilsitz 6 bzw. von der Durchlassöffnung 5 weg in Richtung zweite Wand 8b des Einschnittes 21. Die geometrische Schwenkachse verläuft entlang des Kontaktbereichs zwischen Absperrkörper 3 und Stützboden 22. Bei diesem Vorgang werden die äusseren Federschenkel 12a, 12b; 12a', 12b' in Richtung ortsfester, mittiger Federschenkel 13 gedrückt. Der mittige Federschenkel 13, 13', welcher der ortsfesten zweiten Wand 18b anliegt, wird dahingegen nicht verschoben, so dass sich der Winkel zwischen den äusseren und dem mittigen Federschenkel verkleinert. Die Vorspannung in den Federschenkeln 12a, 12b; 12a', 12b' wird erhöht.

Die Auslenkung des Absperrkörpers 3 wird durch die zweite Wand 8b begrenzt. Bei vollständig geöffnetem Ventil 1 ist der plattenförmige Absperrkörper 3 vollständig aus dem durch die Durchlassöffnung 5 vorgegebenen Strömungsquerschnitt ausgeschwenkt. Der plattenförmige Absperrkörper 3 verläuft in etwa parallel zur zweiten Wand 8b und entsprechend parallel zur Strömungsrichtung R. Eine solche Offenstellung O ist in Figur 1 dargestellt.

Das Fluid kann nun bei vollständig geöffnetem Ventil 1 ungehindert und ohne Umlenkung durch den Strömungsquerschnitt der Durchlassöffnung 5 in Durchströmrichtung strömen.

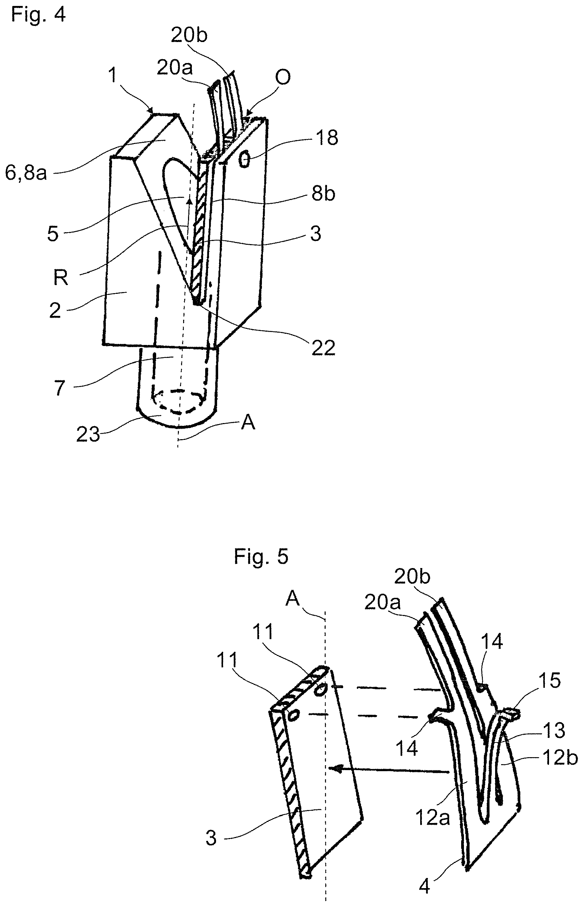

Die Ausführungsform eines Ventils 1 gemäss Figur 4 und 5 entspricht unterscheidet sich von der Ausführungsform nach Figur 1 bis 3 durch Stellfinger 20a, 20b, welche Verlängerungen der äusseren Federschenkel 12a, 12b sind. Die Stellfinger 20a, 20b ragen aus dem Einschnitt heraus. Über die Stellfinger lässt sich manuell oder über einen entsprechenden Aktuator oder einen Anschlag die Stellung des Absperrkörpers 3 und somit die Offenstellung oder die Druckkraft, mit welcher der Ventilkörper 3 durch die Biegefeder 4 an den Ventilsitz gedrückt wird, einstellen.

Die Figur 4 zeigt ferner einen zylinderförmigen Verlängerungsabschnitt 23, welcher über einen Steckabschnitt in den Zufuhrkanal 7 am Ventilkörper 2 gepresst ist und diesen verlängert. Der zylinderförmige Verlängerungsabschnitt 23 ist jedoch als unabhängig von den Stellfingern 20a, 20b zu betrachten und kann auch im Ausführungsbeispiel nach Figur 1 bis 3 zum Einsatz kommen.

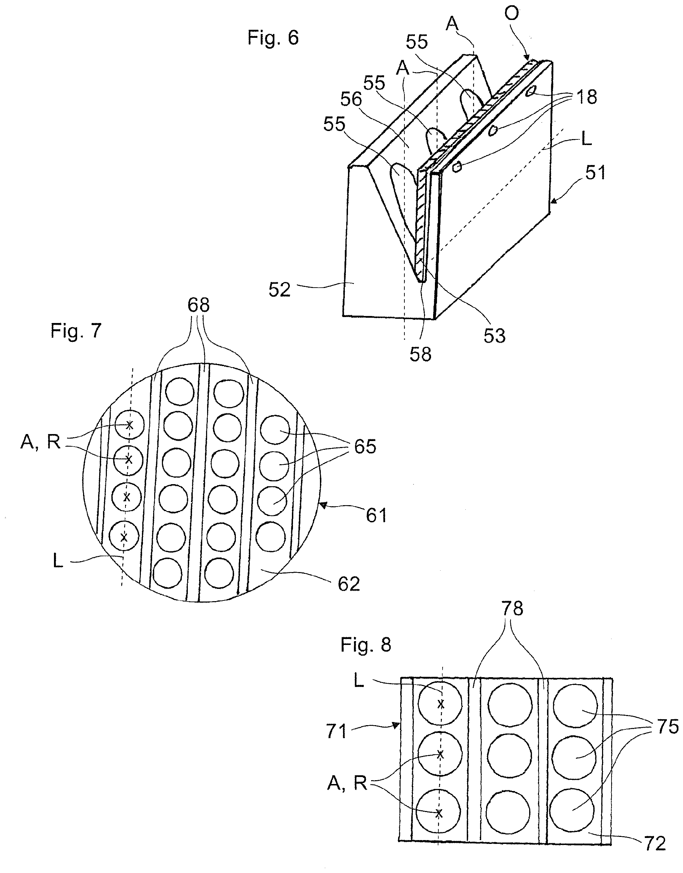

Die Figur 6 zeigt eine Ventilanordnung 51 mit einer Mehrzahl von Ventilen gemäss der Ausführungsform nach Figur 1 bis 3. Die Ventile weisen einen gemeinsamen Ventilkörper 52 auf, welche einen entlang einer Längsachse L verlaufenden V-förmigen Einschnitt 57 ausbildet. Durchlassöffnungen 55 von Zufuhrkanälen münden entlang der Längsachse L hintereinander in der ersten Wand des Einschnitts 57. Die erste Wand des Einschnitts 57 bildet die Ventilsitze 56 der einzelnen Ventile aus. Die Durchlassöffnungen 55 sind über einen gemeinsamen, plattenförmigen Absperrkörper 53 verschliessbar. Der Absperrkörper 53 ist in bereits beschriebener Weise im Einschnitt 57 angeordnet und wird durch den Stützboden 58 abgestützt. Die Figur 6 zeigt die Ventile in einer Offenstellung O.

Die Ventilanordnung 51 kann eine oder mehrere Biegefedern enthalten (nicht gezeigt), welche den gemeinsamen Absperrkörper 53 unter Ausübung einer Vorspannkraft in eine Schliessstellung auf den Ventilsitz 56 drücken. Alternativ zum gemeinsamen Absperrkörper 53 können auch für jede Durchlassöffnung 55 ein separater Absperrkörper und eine separate Biegefeder vorgesehen sein. So werden die einzelnen Ventile individuell betätigt.

Die Figur 7 zeigt eine weitere Ausführungsform einer Ventilanordnung 61. Die Ventilanordnung 61 umfasst einen runden, plattenartigen Ventilkörper 62. Der Ventilkörper 62 weist somit die geeignete Passform zum Einbau in einen Rohrquerschnitt auf.

Die Figur 8 zeigt noch eine weitere Ausführungsform einer Ventilanordnung 71. Die Ventilanordnung 71 umfasst einen rechteckförmigen, plattenartigen Ventilkörper 72.

Die beiden Ausführungsformen nach Figur 7 und 8 unterscheiden sich also durch die Aussengeometrie des Ventilkörpers 62, 72. Beide Ventilanordnungen 61, 71 weisen mehrere parallel zueinander und nebeneinander verlaufende Einschnitte, welche jeweils einen Stützboden 68, 78 zur Abstützung eines Absperrkörpers ausbilden.

Die Einschnitte sind parallel zu einer Längsachse L ausgerichtet. Die Durchlassöffnungen 65, 75 von Zufuhrkanälen münden in den Einschnitten. In jedem Einschnitt sind eine Mehrzahl von parallel zur Längsachse L hintereinander angeordnete Durchlassöffnungen 65, 75 angeordnet. Die Ventilanordnung 61, 71 weist so mehrere Kolonnen bzw. Reihen von Durchlassöffnungen 65, 75 auf.

Ferner enthalten die Ventilanordnungen nach Figur 7 und 8 Absperrkörper und Biegefedern (nicht gezeigt).

Die Anordnung dieser Elemente und die Funktionsweise der Ventile gemäss den Ausführungsformen nach Figur 6 bis 8 entspricht den Ventilen nach Figur 1 bis 5.

## Patentansprüche

1. Geradstromventil (1), enthaltend einen Ventilkörper (2), welcher einen Zufuhrkanal (7) enthält, der in Durchströmrichtung (R) betrachtet in einer Durchlassöffnung (5) endet, wobei eine die Durchlassöffnung (5) umgebende Abschlussfläche einen Ventilsitz (6) ausbildet, ferner enthaltend ein Absperrorgan mit einem zwischen einer Schliessstellung (S) und Offenstellung (O) beweglichen Absperrkörper (3), welcher in Schliessstellung (S) dem Ventilsitz (6) anliegt, wobei das Ventil (1) Rückstellmittel (4) enthält, welche imstande sind, auf den Absperrkörper (3) eine in Richtung Schliessstellung (S) wirkende Rückstellkraft auszuüben, wobei der Absperrkörper (3) zwischen einer Offen- (O) und Schliessstellung (S) schwenkbar beweglich ist,
**dadurch gekennzeichnet, dass**
der Ventilkörper (2) einen V-förmigen Einschnitt (21) ausbildet, in welchem die Durchlassöffnung (5) angeordnet ist, wobei eine erste Wand (8a) des V-förmigen Einschnittes (21) den Ventilsitz (6) ausbildet.

2. Ventil nach Anspruch 1, **dadurch gekennzeichnet, dass** der Zufuhrkanal (7) derart relativ zum V-förmigen Einschnitt (21) angeordnet, dass die Fortsetzung der zur Durchströmrichtung (R) parallelen Kanalachse (A) durch den V-förmigen Einschnitt (21) verläuft, ohne die dem Ventilsitz (6) gegenüber liegende Wand (8b) des V-förmigen Einschnittes (21) zu kreuzen.

3. Ventil nach Anspruch 1 oder 2, **dadurch gekennzeichnet, dass** der Zufuhrkanal (7) derart relativ zum V-förmigen Einschnitt (21) angeordnet ist, dass die virtuelle Verlängerung des Durchströmquerschnittes der Durchlassöffnung (5) entlang der zur Durchströmrichtung (R) parallelen Kanalachse (A) in den V-förmigen Einschnitt (21) hinein die dem Ventilsitz (6) gegenüber liegende Wand (8b) des V-förmigen Einschnittes (21) nicht schneidet.

4. Ventil nach einem der Ansprüche 1 bis 3, **dadurch gekennzeichnet, dass** der Absperrkörper (3) in der Schliessstellung (S) schräg zur Strömungsrichtung (R) angeordnet ist.

5. Ventil nach einem der Ansprüche 1 bis 4, **dadurch gekennzeichnet, dass** der Absperrkörper (3) in der Schliessstellung (S) in einem spitzen Winkel, insbesondere in einem Winkel von 5 bis 50° zur Strömungsrichtung (R) angeordnet ist.

6. Ventil nach einem der Ansprüche 1 bis 5, **dadurch gekennzeichnet, dass** eine zweite Wand (8b) des Einschnittes (21) eine Schwenkbegrenzung für den Absperrkörper (3) in der Offenstellung (O) ausbildet.

7. Ventil nach einem der Ansprüche 1 bis 6, **dadurch gekennzeichnet, dass** der Einschnitt (21) einen Stützboden (22) ausbildet, auf welchem das Absperrorgan (3) abgestützt ist.

8. Ventil nach einem der Ansprüche 1 bis 7, **dadurch gekennzeichnet, dass** die Rückstellmittel ein Rückstellelement (4) umfassen, welches in der Lage ist, auf den Absperrkörper (3) eine Rückstellkraft auszuüben.

9. Ventil nach Anspruch 8, **dadurch gekennzeichnet, dass** das Rückstellelement (4) ein Federelement ist.

10. Ventil nach Anspruch 9, **dadurch gekennzeichnet, dass** das Federelement (4) Federschenkel (12a, 12b, 13) enthält, wobei zur Ausübung einer Rückstellkraft auf den Rückstellkörper (3) wenigstens ein Federschenkel (12a, 12b) mit dem Absperrkörper (3) und wenigstens ein Federschenkel (13) mit der zweiten Wand (8b) des Einschnittes (21) in mechanischer Wirkverbindung steht.

11. Ventil nach Anspruch 10, **dadurch gekennzeichnet, dass** der wenigstens eine mit dem Absperrkörper (3) in Wirkverbindung stehende Federschenkel (12a, 12b) eine Verlängerung in Ausführung eines Stellfingers (20a, 20b) enthält, welcher sich über den Einschnitt (21) im Ventilkörper (2) hinaus erstreckt.

12. Ventil nach einem der Ansprüche 10 bis 11, **dadurch gekennzeichnet, dass** wenigstens ein Federschenkel (12a, 12b) zur Führung des Absperrkörpers (3) eine in eine Vertiefung im Absperrkörper (3) eingreifende Führungszunge (14) aufweist.

13. Ventil nach einem der Ansprüche 1 bis 12, **dadurch gekennzeichnet, dass** der Absperrkörper (3) eine plattenförmiges Element ist.

14. Ventilanordnung (51, 61, 71) mit einer Mehrzahl von Geradstromventilen nach einem der Ansprüche 1 bis 13, wobei die Geradstromventile der Ventilanordnung (51, 61, 71) einen gemeinsamen Ventilkörper (52, 62, 72) mit einer Mehrzahl von Durchflussöffnungen (55, 65, 75) aufweisen.

15. Verdichter mit einem Geradstromventil gemäss einem der Ansprüche 1 bis 13.

## Claims

1. Straight-flow valve (1) including a valve body (2) which includes an infeed duct (7) which, when viewed in the throughflow direction (R), terminates in a passage opening (5), wherein a terminal face that surrounds the passage opening (5) configures a valve seat (6), furthermore including a shut-off member having a shut-off body (3) which is movable between a closed position (S) and an open position (O) and which in the closed position (S) bears on the valve seat (6), wherein the valve (1) has restoring means (4) which are capable of exerting on the shut-off body (3) a restoring force acting in the direction of the closed position (S), wherein the shut-off body (3) is movable in a pivoting manner between an open position (O) and a closed position (S),
**characterized in that**
the valve body (2) configures a V-shaped cut (21) in which the passage opening (5) is disposed, wherein a first wall (8a) of the V-shaped cut (21) configures the valve seat (6).

2. Valve according to Claim 1, **characterized in that** the infeed duct (7) is disposed relative to the V-shaped cut (21) in such a manner that the continuation of the duct axis (A), which is parallel with the throughflow direction (R), runs through the V-shape cut (21) without intersecting the wall (8b) of the V-shaped cut (21) that lies opposite the valve seat (6).

3. Valve according to Claim 1 or 2, **characterized in that** the infeed duct (7) is disposed relative to the V-shaped cut (21) in such a manner that the virtual extension of the throughflow cross section of the passage opening (5) along the duct axis (A), which is parallel with the throughflow direction (R), into the V-shaped cut (21) does not intersect the wall (8b) of the V-shaped cut (21) that lies opposite the valve seat (6).

4. Valve according to one of Claims 1 to 3, **characterized in that** the shut-off body (3) in the closed position (S) is disposed so as to be oblique in relation to the flow direction (R).

5. Valve according to one of Claims 1 to 4, **characterized in that** the shut-off body (3) in the closed position (S) is disposed at an acute angle, in particular at an angle of 5 to 50°, in relation to the flow direction (R).

6. Valve according to one of Claims 1 to 5, **characterized in that** a second wall (8b) of the cut (21) configures a pivot delimitation for the shut-off body (3) in the open position (O).

7. Valve according to one of Claims 1 to 6, **characterized in that** the cut (21) configures a support base (22) on which the shut-off body (3) is supported.

8. Valve according to one of Claims 1 to 7, **characterized in that** the restoring means comprise a restoring element (4) which is capable of exerting a restoring force on the shut-off body (3) .

9. Valve according to Claim 8, **characterized in that** the restoring element (4) is a spring element.

10. Valve according to Claim 9, **characterized in that** the spring element (4) includes spring legs (12a, 12b, 13), wherein for exerting a restoring force on the restoring body (3) at least one spring leg (12a, 12b) in mechanical terms is operatively connected to the shut-off body (3), and at least one spring leg (13) in mechanical terms is operatively connected to the second wall (8b) of the cut (21).

11. Valve according to Claim 10, **characterized in that** the at least one spring leg (12a, 12b) that is operatively connected to the shut-off body (3) includes an extension in the embodiment of an actuation finger (20a, 20b) which extends beyond the cut (21) in the valve body (2).

12. Valve according to one of Claims 10 to 11, **characterized in that** at least one spring leg (12a, 12b) for guiding the shut-off body (3) has a guide tongue (14) that engages in a depression in the shut-off body (3).

13. Valve according to one of Claims 1 to 12, **characterized in that** the shut-off body (3) is a plate-shaped element.

14. Valve assembly (51, 61, 71) having a plurality of straight-flow valves according to one of Claims 1 to 13, wherein the straight-flow valves of the valve assembly (51, 61, 71) have a common valve body (52, 62, 72) having a plurality of throughflow openings (55, 65, 75).

15. Compressor having a straight-flow valve according to one of Claims 1 to 13.

## Revendications

1. Soupape de débit (1) à passage direct contenant un corps de soupape (2), lui-même contenant un canal d'alimentation (7) qui, vu dans la direction d'écoulement (R), aboutit à une traversée (5), dans laquelle une surface de délimitation entourant la traversée (5) constitue un siège de soupape (6), contenant en outre un organe de fermeture doté d'un corps de fermeture (3) qui est mobile entre une position de fermeture (S) et une position d'ouverture (O) et qui vient au contact du siège de soupape (6) en position de fermeture (S), la soupape (1) contenant des moyens de rappel (4) capables d'exercer sur le corps de fermeture (3) une force de rappel agissant dans la direction de la position de fermeture (S), le corps de fermeture (3) pouvant osciller entre une position d'ouverture (O) et une position de fermeture (S),
**caractérisée en ce que**
le corps de soupape (2) forme une encoche en forme de V (21) dans laquelle est ménagée la traversée (5), une première paroi (8a) de l'encoche en forme de V (21) constituant le siège de soupape (6).

2. Soupape selon la revendication 1, **caractérisée en ce que** le canal d'alimentation (7) est disposé par rapport à l'encoche en forme de V (21) de sorte que le prolongement de l'axe de canal (A) qui est parallèle à la direction d'écoulement (R) s'étend à travers l'encoche en forme de V (21) sans rencontrer la paroi (8b) de l'encoche en forme de V (21) qui fait face au siège de soupape (6).

3. Soupape selon l'une quelconque des revendications 1 et 2, **caractérisée en ce que** le canal d'alimentation (7) est disposé par rapport à l'encoche en forme de V (21) de sorte que la prolongation virtuelle de la section transversale de passage de la traversée (5) à l'intérieur de l'encoche en forme de V (21) et le long de l'axe de canal (A) qui est parallèle à la direction d'écoulement (R) ne rencontre pas la paroi (8b) de l'encoche en forme de V (21) qui fait face au siège de soupape (6).

4. Soupape selon l'une quelconque des revendications 1 à 3, **caractérisée en ce que** le corps de fermeture (3) est disposé en biais par rapport à la direction d'écoulement (R) lorsqu'il est en position de fermeture (S).

5. Soupape selon l'une quelconque des revendications 1 à 4, **caractérisée en ce que** le corps de fermeture (3) est disposé selon, plus particulièrement selon un angle de 5 à 50° par rapport à la direction d'écoulement (R), lorsqu'il est en position de fermeture (S).

6. Soupape selon l'une quelconque des revendications 1 à 5, **caractérisée en ce qu'**une deuxième paroi (8b) de l'encoche (21) constitue une limite d'oscillation du corps de fermeture (3) dans la position d'ouverture (O).

7. Soupape selon l'une quelconque des revendications 1 à 6, **caractérisée en ce que** l'encoche (21) constitue un fond d'appui (22) sur lequel s'appuie l'organe de fermeture (3).

8. Soupape selon l'une quelconque des revendications 1 à 7, **caractérisée en ce que** les moyens de rappel comprennent un élément de rappel (4) capable d'exercer une force de rappel sur le corps de fermeture (3).

9. Soupape selon la revendication 8, **caractérisée en ce que** l'élément de rappel (4) est un élément élastique.

10. Soupape selon la revendication 9, **caractérisée en ce que** l'élément élastique (4) comprend des branches de ressort (12a, 12b, 13), afin d'exercer une force de rappel sur le corps de rappel (3), au moins une branche de ressort (12a, 12b) étant en liaison mécanique dynamique avec le corps de fermeture (3) et au moins une branche de ressort (13) étant en liaison mécanique dynamique avec la deuxième paroi (8b) de l'encoche (21) .

11. Soupape selon la revendication 10, **caractérisée en ce que** l'au moins une branche de ressort (12a, 12b) en liaison dynamique avec le corps de fermeture (3) comprend une prolongation réalisée sous la forme d'un doigt de commande (20a, 20b) qui s'étend au-delà de l'encoche (21) dans le corps de soupape (2).

12. Soupape selon l'une quelconque des revendications 10 et 11, **caractérisée en ce qu'**au moins une branche de ressort (12a, 12b) comporte une languette de guidage (14) destinée à guider le corps de fermeture (3) et s'engrenant avec une encoche pratiquée dans le corps de fermeture (3).

13. Soupape selon l'une quelconque des revendications 1 à 12, **caractérisée en ce que** le corps de fermeture (3) est un élément en forme de plaque.

14. Enemble de soupapes (51, 61, 71) comprenant une pluralité de soupapes de débit à passage direct selon l'une quelconque des revendications 1 à 13, dans lequel, les soupapes de débit à passage direct de l'ensemble de soupapes (51, 61, 71) présentent un corps de soupape commun (52, 62, 72) doté d'une pluralité d'orifices de débit (55, 65, 75).

15. Compresseur équipé d'une soupape de débit à passage direct selon l'une quelconque des revendications 1 à 13.
